# EUROPEAN PATENT SPECIFICATION

(11) **EP 3 584 510 B1**
(45) Date of publication and mention of the grant of the patent: **13.09.2023**
(21) Application number: 19177305.0
(22) Date of filing: 29.05.2019
(51) Int. Cl.: F24F 13/08, F24F 13/06, F24F 13/02

(54) **A TERMINAL DEVICE TO BE CONNECTED TO A VENTHOLE AND A METHOD FOR CONNECTING A TERMINAL DEVICE TO A VENTHOLE**
AN EINE ENTLÜFTUNGSÖFFNUNG ANZUSCHLIESSENDE ENDGERÄTEVORRICHTUNG UND VERFAHREN ZUM ANSCHLIESSEN EINER ENDGERÄTEVORRICHTUNG AN EINE ENTLÜFTUNGSÖFFNUNG
DISPOSITIF DE TERMINAL DESTINÉ À ÊTRE CONNECTÉ À UN TROU D'ÉVENT ET PROCÉDÉ POUR CONNECTER UN DISPOSITIF TERMINAL À UN TROU D'ÉVENT

(30) Priority: 19.06.2018 FI 20185549
(43) Date of publication of application: 25.12.2019
(73) Proprietor: Climecon OY, 00880 Helsinki (FI)
(72) Inventor: LEHTOVAARA, Sami, 00880 Helsinki (FI)
(74) Representative: Berggren Oy

(56) References cited:
- DE-A1-102005 028 781
- DE-A1-102015 216 810
- FR-A1- 3 055 405
- GB-A- 2 550 319

## Description

The invention relates to a terminal device to be connected to a venthole, which venthole has a wall and which terminal device has a frame part and gripping members which can be extended inside the venthole for attaching to the venthole wall. The invention also relates to a method for connecting the terminal device to the venthole.

In mechanical ventilation, air is led into rooms and removed from rooms along ventilation pipes. A terminal device, such as a valve or a diffuser, is installed in the ends of the ventilation pipes that open into the rooms, which terminal device is used to regulate the amount and/or direction of the air flow entering the room or the air flow removed from the room. In the end of the ventilation pipe, a channel collar can be installed, to which the terminal device is attached. The ends of the ventilation ducts usually open in the ceiling of the room or in the upper edge of the wall. In terminal devices to be installed high up it is important that the terminal device stays reliably in place in the end of the ventilation pipe. The importance of a reliable fastening is especially pronounced in terminal devices to be installed in a ceiling.

There are many different alternatives for attaching terminal devices. The terminal device can have a short pipe which extends into the channel collar, the outer surface of which pipe has threads. Such a terminal device can be fastened reliably to a channel collar, which has threads which fit in the threads of the terminal device. Many channel collars are however smooth on their inner surface, so terminal devices with threads cannot be attached to them. The outer surface of the pipe extending into the terminal device channel collar can also have a ring seal, which in a terminal device installed in place is pressed tightly against the inner surface of the channel collar. A terminal device fastening based solely on the friction of a compressed seal is unreliable, especially in terminal devices to be attached in the ceiling.

It is further possible to attach the terminal device in place in the ceiling or wall surface surrounding the opening of the ventilation pipe with a screw attachment. The screw attachment is difficult, especially when the wall or ceiling surrounding the opening of the ventilation pipe is made of concrete or plasterboard, behind which there is no sturdy base, into which the attaching screws can be screwed. Publications SE 107238 and FI 61353 describe terminal devices, which have sharp-tipped protrusions, which are arranged to push against the inner surface of the channel collar or ventilation pipe. The gripping ability of such protrusions is however uncertain. Additionally in these solutions, the sharp-tipped protrusions are attached to a beam passing across the venthole of the terminal device, which reduces the effective size of the venthole and disturbs air flow through the venthole.

Publication WO 00/77455 describes an arrangement for attaching a ventilation valve, which comprises two semi-circular thread-like compression springs, which are attached at their ends to the valve frame in a hinged manner. At the midpoint of the length of the compression springs there is a compression piece, which presses against the ventilation duct wall when the valve is attached.

Document DE 102015216810 A1 discloses a terminal device comprising a frame part, which has bendable retaining elements. Documents FR 3055405, DE 102005028781 A1 and GB 2550319 disclose terminal devices comprising rotatable attaching elements.

The object of the invention is to provide a ventilation terminal device and a method for connecting the terminal device to a venthole, with which the problems related to the attaching of known terminal devices can be significantly reduced.

The objects of the invention are obtained with a terminal device to be connected to a venthole and a method, which are characterized in what is presented in the independent claims. Some advantageous embodiments of the invention are presented in the dependent claims.

A first aspect of the invention as defined in claim 1, relates to a terminal device to be connected to a venthole, which venthole has a wall and which terminal device has a frame part and gripping members which can be extended inside the venthole for attaching to the venthole wall. The venthole can be the open end of a ventilation duct, the open end of a pipe or channel branching out from a ventilation duct or a hole in a wall or ceiling, through which air is designed to flow. The venthole wall can be the ventilation duct wall, the wall of a channel collar delimiting the opening or the surface of the material layer of the ceiling or wall structure. The gripping members comprise a first locking tab and a second locking tab, which locking tabs have an attaching surface to be set against the inner surface of the venthole. The first and second locking tab can be set in a first formation, where the first and second locking tab are at a first distance from each other, and in a second formation, where the first and second locking tab are at a second distance from each other. The second distance is larger than the first distance.

When the locking tabs are in the first formation, they can be fitted at the same time via the open end of the venthole into the venthole. When the locking tabs are inside the venthole, they can be moved into the second formation, whereby their attaching surfaces settle against the inner surface of the venthole, attaching the terminal device to the venthole. When there are only two gripping members, their attaching surfaces settle against the inner surfaces on opposite edges of the venthole. In a terminal device connected to the end of a ventilation duct with a circular cross-section, the diameter of the ventilation duct passes through both attaching surfaces.

The terminal device can be an air inlet valve, an exhaust valve or a diffuser. If the valves or diffusers are formed from parts attached to each other, which can easily be detached and reattached, the terminal device can be a part of some above-mentioned valve or diffuser. The terminal device can further be a separate attaching piece to be connected to the venthole, which piece has attaching means for attaching a valve or diffuser.

In an advantageous embodiment of the terminal device according to the invention, the gripping members additionally comprise a third locking tab, so that the first, second and third locking tab can be set in a first formation, where the perimeter of the triangle delimited by the first, second and third locking tab has a first length, and in a second formation, where the perimeter of the triangle delimited by the first, second and third locking tab has a second length, which second length is larger than the first length. In the second formation, the mutual distance between the first, second and third locking tab can be substantially the same size. Thus, the locking surfaces of the locking tabs fitted into the round venthole are supported on the third-part points of the perimeter of the inner surface of the venthole wall.

In a second advantageous embodiment of the terminal device according to the invention, the gripping members additionally comprise a fourth locking tab, so that the first, second, third and fourth locking tab can be set in a first formation, where the perimeter of the polygon delimited by the first, second, third and fourth locking tab has a first length, and in a second formation, where the perimeter of the polygon delimited by the first, second, third and fourth locking tab has a second length, which second length is larger than the first length. In the second formation, the mutual distance between the first, second, third and fourth locking tab can be substantially the same size. Thus, the locking surfaces of the locking tabs fitted into the round venthole are supported on the fourth-part points of the perimeter of the inner surface of the venthole wall.

In a third advantageous embodiment of the terminal device according to the invention, at least one locking tab is immobile in relation to the frame part of the terminal device. The immobile locking tab can be an inseparable part of the frame part of the terminal device. Advantageously, at least one other locking tab is mobile in relation to the frame part of the terminal device.

According to the invention, said locking tab is arranged in the attaching member, which is attached to the frame part of the terminal device. In this embodiment, the attaching member is thus a separate part, which is attached to the frame part of the terminal device. Advantageously, at least one attaching member is attached to the frame part of the terminal device in an immobile manner.

According to the invention, at least one attaching member is attached to the frame part of the terminal device in a hinged manner, so that the attaching member can be turned into a first position, where the locking tabs settle in the first formation, and into a second position, where the locking tabs settle in the second formation. The attaching member can advantageously be locked into the second position.

In still another advantageous embodiment of the terminal device according to the invention, the attaching surface has a shape which substantially corresponds to the shape of the inner surface of the venthole wall and/or a surface shape which improves friction, such as a roughened surface or a serrated pattern. Alternatively or additionally, the attaching surface of the locking tab can have a flexible material layer. The flexible material layer can contain rubber, neoprene, plastic, polyurethane or silicone.

In still another advantageous embodiment of the terminal device according to the invention, there is an adhesive layer on the attaching surface of the locking tab or on the surface of the flexible material layer. Alternatively or additionally, the locking tab can have a magnet or the locking tab can at least partly be magnetic.

In still another advantageous embodiment of the terminal device according to the invention, the locking tab has a support part for supporting and/or carrying a device to be placed inside the ventilation duct.

A second aspect of the invention as defined in claim 15, relates to a method for connecting a terminal device to a venthole, which venthole has a wall and which terminal device has a frame part and gripping members which can be extended inside the venthole for attaching to the venthole wall. In the method the gripping members are set in a first formation, where the gripping members are at a first distance from each other, the gripping members are fitted inside the venthole, and while the gripping members are inside the venthole, the gripping members are set in a second formation, where the gripping members are at a second distance from each other, which second distance is larger than the first distance. In the second formation the gripping members settle against the inner surface of the venthole wall, attaching the terminal device to the venthole. Advantageously, the method comprises connecting an above-described terminal device or some advantageous embodiment thereof to the venthole.

An advantage of the invention is that it makes possible the attaching of terminal devices to ventholes with different wall surface shapes. The invention thus increases the suitability of terminal devices to different use targets.

A further advantage of the invention is that it makes possible an easy and reliable attaching of a terminal device to targets, where screw attachment of the terminal device is difficult either due to the hardness or softness of the wall surrounding the venthole.

In the following, the invention will be described in detail. In the description, reference is made to the enclosed drawings, in which
figures 1a and 1b show as an example a part of a terminal device according to the invention seen diagonally from above,
figure 2 shows as an example an advantageous embodiment of a terminal device according to the invention seen diagonally from below,
figures 3a, 3b and 3c show as examples some advantageous embodiments of the terminal device according to the invention and
figures 4a and 4b show cross-sectional views of the connecting of a terminal device to a venthole with the method according to the invention.

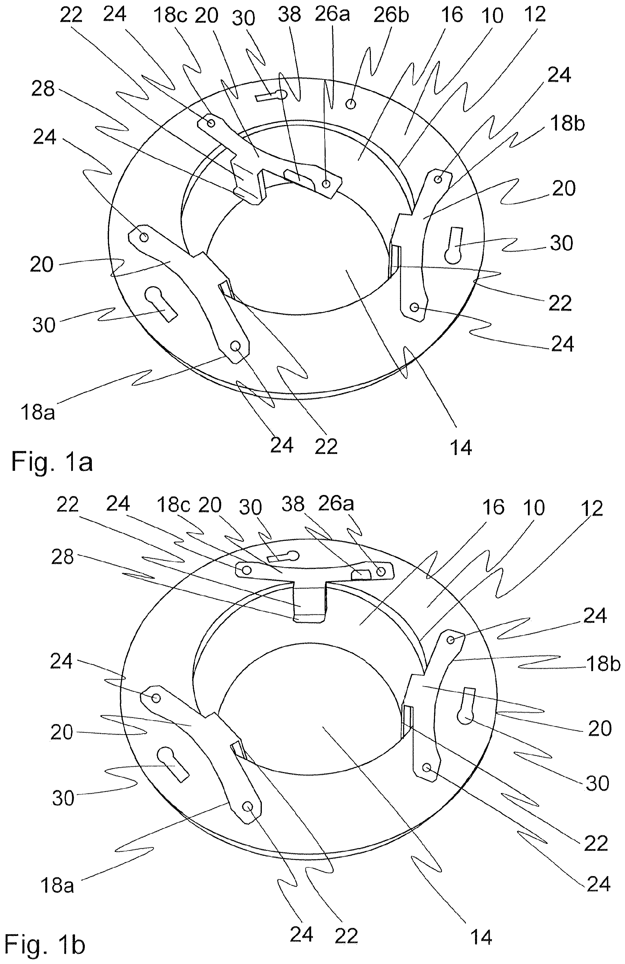

Figures 1a and 1b show as an example a part of a terminal device according to the invention seen diagonally from above. In the following both figures are described simultaneously. The terminal device has a round plate-like frame part 10, in the middle of which there is a round flow hole 12. The frame part shown in the figures only makes up a part of the actual terminal device, which can be an air inlet valve, and exhaust valve or a so-called diffuser, which is used to regulate the amount of air flowing through the terminal device and/or to guide the air flow in a desired direction. The frame part has three elongated installation holes 30, in which the parts of the terminal device not shown in the figure are attached. The terminal device is meant to be installed in a venthole 14 so that the flow hole 12 of the frame part 10 and the venthole settle in line with each other (the venthole is not part of the invention). The venthole can be the open end of a ventilation duct or pipe or a hole penetrating the ceiling or wall of a building, through which air is arranged to flow. The venthole has a pipe-like wall 16, which determines the cross-sectional shape and cross-sectional area of the venthole. The venthole shown in Figures 1a and 1b is surrounded by a channel collar, the wall of which forms the wall of the venthole.

Three attaching members are attached to the frame part 10, a first attaching member 18a, a second attaching member 18b and a third attaching member 18c. The attaching members have an elongated plate-like base 20 and a locking tab 22 turning in a substantially right angle from the plane of the base. The tip 28 of the locking tab bends from the plane of the locking tab in a substantially right angle, so that the tip and the base diverge from the plane of the locking tab in opposite directions. The attaching members are placed at substantially even intervals around the flow hole 12, so that the first surface of their base settles against the first surface of the frame part, and the locking tabs extend through the hole 12 into the venthole, i.e. into the space delimited by the venthole wall 16. The first and second attaching member 18a, 18b are attached to the frame part 10 in a fixed manner with two rivets 24, which extend to the ends of the base and by them through the holes drilled in the frame part from the first side of the base to the second side of the frame part. The third attaching member 18c is attached to the frame part outside the flow hole with a rivet 24 only at the first end of the base, so that the third attaching member can rotate in the plane defined by the frame part around the rivet. The locking tab thus moves in the direction of the plane defined by the plate-like frame part when the attaching member is turned. The base of the third attaching member has a pivoting lever 38 for changing the position of the attaching member.

In figure 1a the third attaching member 18c is rotated in a first position, where the second end of the base is inside the area delimited by the flow hole 12 in the frame part. The locking tab bending from the base is inside the venthole clearly apart from the wall 16 of the venthole. In figure 1a the locking tabs of the attaching members are in the first formation, where the perimeter of the triangle delimited by the locking tabs has a first length, which is smaller than the perimeter of the venthole. The locking tabs in the first formation can thus be fitted inside the venthole.

In figure 1b the third attaching member 18c is rotated in a second position, where its base settles substantially completely on the first surface of the frame part and the locking tab is moved toward the venthole wall 16. In the second end of the base 20 of the third attaching member 18c there is a first attaching hole 26a and correspondingly in the frame part there is a second attaching hole 26b, which settle in line with each other, when the third locking member is rotated in the second position according to figure 1b. The third attaching member is locked into the position according to figure 1b by installing a penetrating screw or rivet in the attaching holes 26a, 26b settling in line with each other. In figure 1b the locking tabs settle in a second formation, where the perimeter of the triangle delimited by the locking tabs has a second length, which is larger than the first length.

In the second formation the locking tabs of the attaching members are pressed against the venthole walls on the second side of the frame part, i.e. they extend through the flow hole of the frame part. The bases of the attaching members are on the first side of the frame part, pressed against the first surface of the frame part and outside the area delimited by the flow hole 12 of the frame part. In the second position only the locking tabs of the attaching members are inside the flow hole and they too are tightly pressed against the wall of the flow hole, so the attaching members do not in practice decrease the effective area of the flow hole and venthole at all.

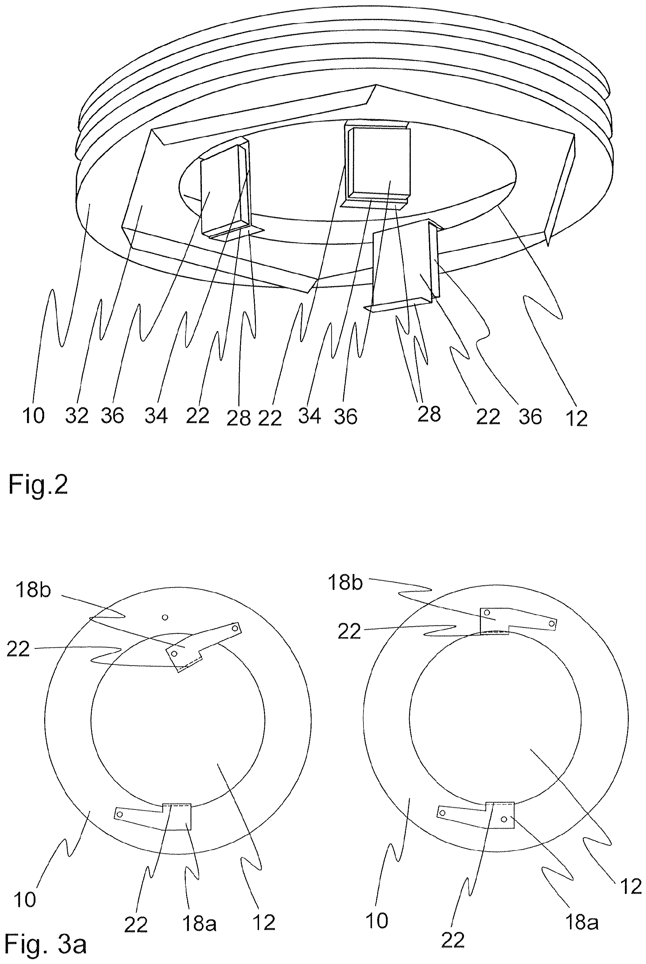

Figure 2 shows as an example a terminal device according to the invention seen diagonally from below. In figure 2 the terminal device is shown in its entirety, whereby it comprises a frame part 10 and plate-like pieces arranged on the first side of the frame part. The plate-like piece furthest from the frame part is a solid plate, but in the piece between the furthest piece and the frame part there is a hole in the middle for air to flow through. Air can thus flow between the plate-like parts into the flow hole of the frame part. The terminal device can be manufactured completely or partly from plastic and/or metal.

On the second surface of the frame part there is a hexagonal support plate 32, in the middle of which there is a hole of the same size as the flow hole 12. Every other edge side of the support plate is bent in an angle to point away from the plane of the frame part. The round edge of the frame part is shaped as a border, which turns in the direction of the second surface of the frame part, so that the free edge of the border and the tips of the bent edge sides of the support plate settle substantially on the same level.

The locking tabs 22 extend through the flow hole 12 of the frame part 10 to the other side of the frame part. The surfaces of the locking tabs, which surfaces are furthest from each other, are attaching surfaces 34, on which a flexible material layer 36 has been arranged. The flexible material layer can contain for example rubber, neoprene, plastic, polyurethane or silicone. The thickness of the flexible material layer can be 1-4 mm, advantageously 2-3 mm. When the terminal device is attached in place in the venthole, the flexible material layer on the attaching surface is pushed against the inner surface of the venthole wall and slightly compressed. The terminal device remains in place in the venthole due to the friction power working between the material layer surface and the venthole wall.

The tips 28 of the locking tabs settle substantially at the same level and point toward an imaginary mid-axis passing through the flow hole. The tips function as a support part, on which a device to be placed in the venthole or in the ventilation duct continuing from it, such as a flow regulator or silencer, can be supported. Bending the tips of the locking tab into an angle from the plane of the locking tab is not necessary for locking the terminal device into the venthole, so the locking tabs can also be realized without tips bent in an angle, especially when it is not necessary to place a separate device into the flow duct.

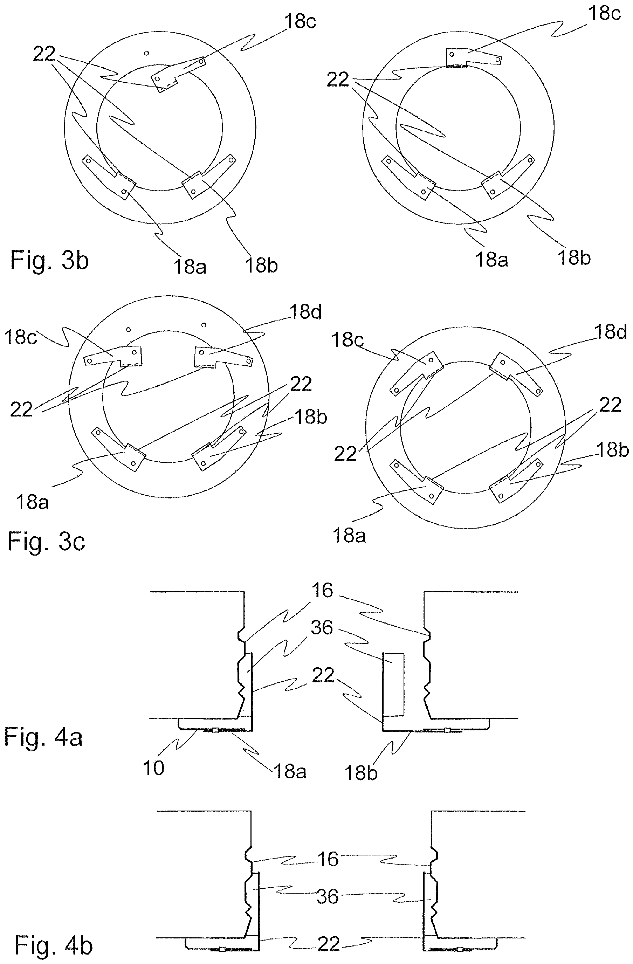

Figures 3a, 3b and 3c show as examples some advantageous embodiments of the terminal device according to the invention as a principal view. The figures show the terminal device seen from above. The figures show only the frame part of the terminal device and the attaching members attached thereto. In both figures the figure on the left shows the terminal device in a situation where the locking tab 22 in the attaching members are in the first formation, and the figure on the right shows a situation where the locking tabs are in the second formation.

The embodiment of the terminal device shown in figure 3a has two attaching members, of which the first attaching member 18a is attached to the frame part in a fixed manner and the second attaching member 18b is attached in a hinged manner to rotate around an attaching rivet. The attaching members are situated on opposite sides of the flow hole 12 of the frame part 10.

The embodiment of the terminal device shown in figure 3b has three attaching members, of which two are attached to the frame part in a fixed manner and one to rotate around an attaching rivet. The distance between the attaching members 18a, 18b attached in a fixed manner is smaller than the distance between the attaching member attached in a fixed manner and the attaching member 18c attached in a hinged manner. Such a placement of the attaching members provides more working space for installing the terminal device.

The embodiment of the terminal device shown in figure 3c has four attaching members, of which two are attached to the frame part in a fixed manner and two to rotate around an attaching rivet. The mutual distance between the attaching members 18a, 18b attached in a fixed manner and the attaching members 18c, 18d attached in a hinged manner is smaller than the distance between the attaching member attached in a fixed manner and the attaching member attached in a hinged manner. Using four attaching members can increase the friction power holding the terminal device in place.

Figures 4a and 4b show cross-sectional views of the connecting of a terminal device to a venthole 14 with the method according to the invention. The terminal device shown in the figures comprises two attaching members, of which the first attaching member 18a is attached to the frame part 10 of the terminal device in a fixed manner and the second attaching member 18b is attached in a hinged manner as described above. For the sake of clarity, only the frame part 10 and the attaching members 18a, 18b of the terminal device are shown in the figures. In the following both figures are described simultaneously.

In figures 4a and 4b the venthole is formed from a metal channel collar cast onto a concrete ceiling or wall. The threadless pipe-like wall part of the channel collar forms the venthole wall 16. When attaching the terminal device, the second attaching member 18b is rotated into the first position, where the position of the locking tabs 22 of the attaching members is substantially smaller than the diameter of the venthole. Thereafter the frame part 10 of the terminal device is set on the venthole, so that the frame part settles attached to the wall or ceiling surface surrounding the venthole, both locking tabs settle inside the venthole, and the material layer on the locking tab of the first attaching member is pressed against the inner surface of the venthole wall. Thereafter the second attaching member is rotated into the second position, where the material layer 36 on the attaching surface of its locking tab is pressed against the inner surface of the venthole wall. Finally, the second attaching member is locked into this position with an attaching screw in the manner described above. The frame part thus remains reliably in place in front of the venthole. Finally, the other parts of the terminal device not shown in the figure are attached in place in the frame part, whereafter the installation work is finished.

Connecting terminal devices equipped with three, four or more than four locking tabs to a venthole happens with the same principle as described above.

In the advantageous embodiments of the invention described above the venthole comprises a metal channel collar cast to a concrete ceiling or wall. The venthole does not necessarily need a channel collar, but the venthole can be a hole in the facing panel of a wall or ceiling or an opening in a stone wall. The venthole does not need to have a round shape, but it can have for example an oval or polygonal shape. In a rectangular venthole the terminal device can be attached with two locking tabs, the attaching surfaces of which press against the opposite sides of the venthole wall.

In the above-presented description, the locking tabs are attached in a hinged manner to the planar frame part of the terminal device. The frame part of the terminal device can also comprise a pipe-like part, which settles as a continuation of the flow duct, when the terminal device is installed in place in the venthole. In such terminal devices the locking tabs can be attached in a hinged manner to the inner surface of the pipe-like part of the terminal device.

In the above-described advantageous embodiments of the invention, the attaching surfaces of the locking tabs have a flexible material layer, which is pressed against the inner surface of the venthole wall, when the terminal device is attached in place in the venthole. The terminal thus device remains in place in the venthole due to the friction power working between the material layer surface and the venthole wall. The surface of the flexible material layer settling against the flow duct wall can have a design or profiling, which substantially corresponds to the shape of the inner surface of the flow duct wall.

It is further possible that instead of or in addition to the flexible layer, the attaching surfaces of the locking tabs have a design or profiling, which substantially corresponds to the shape of the inner surface of the flow duct wall to be attached. The attaching surface of the locking tab can also have a surface shape, e.g. a roughened surface or a serrated pattern, which increases the friction between the attaching surface and the venthole wall. Thus, a flexible layer which improves friction is not needed in the attaching surface of the locking tab.

The locking tabs can be attached to the venthole wall also at least partly with a glue layer. The glue layer can be arranged either directly on the attaching surface of the locking tab or on the surface of the flexible layer on the locking tab. The glue layer can be in place on the locking tab, covered with a film which prevents the glue from drying, whereby the film is removed from the glue layer in connection with the attaching of the terminal device.

It is further possible that there is a magnet in the locking tab and especially in its attaching surface or the locking tab is in itself at least partly magnetic. A magnetic locking tab sticks well to a steel channel collar or an open end of a ventilation duct.

Some advantageous embodiments of the terminal device and method according to the invention have been described above. The invention is not limited to the solutions described above, but the inventive idea can be applied in different ways within the scope of the claims.

## Claims

1. A terminal device to be connected to a venthole (14), which venthole (14) has a wall (16) and which terminal device has a plate-like frame part (10) and gripping members which can extend into the venthole (14) for attaching to the venthole (14) wall (16), which gripping members comprise a first locking tab (22) and a second locking tab (22) and which first and second locking tab (22) can be set in a first formation, where the first and second locking tab (22) are at a first distance from each other, and in a second formation, where the first and second locking tab (22) are at a second distance from each other, which second distance is larger than the first distance, **characterized in that** said locking tabs have an attaching surface (34) to be set against the inner surface of the venthole (14) wall (16) and said locking tab (22) is arranged in an attaching member (18a, 18b, 18c, 18d), which attaching member (18a, 18b, 18c, 18d) has plate like base (20) attached to the frame part (10) of the terminal device and the locking tab (22) bends in a substantially right angle from the base (20) and that at least one attaching member (18a, 18b, 18c, 18d) is attached to the frame part (10) in a hinged manner, so that the attaching member (18a, 18b, 18c, 18d) can be turned in the plane defined by the frame part into a first position, where the locking tabs (22) settle in the first formation, and into a second position, where the locking tabs (22) settle in the second formation.

2. The terminal device according to claim 1, **characterized in that** said gripping members additionally comprise a third locking tab (22), so that the first, second and third locking tab (22) can be set in a first formation, where the perimeter of the triangle delimited by the first, second and third locking tab (22) has a first length, and in a second formation, where the perimeter of the triangle delimited by the first, second and third locking tab (22) has a second length, which second length is larger than the first length.

3. The terminal device according to claim 2, **characterized in that** said gripping members additionally comprise a fourth locking tab (22), so that the first, second, third and fourth locking tab (22) can be set in a first formation, where the perimeter of the polygon delimited by the first, second, third and fourth locking tab (22) has a first length, and in a second formation, where the perimeter of the polygon delimited by the first, second, third and fourth locking tab (22) has a second length, which second length is larger than the first length.

4. The terminal device according to any of the claims 1-3, **characterized in that** at least one locking tab (22) is immobile in relation to the frame part (10) of the terminal device.

5. The terminal device according to any of the claims 1-4, **characterized in that** at least one locking tab (22) is moveable in relation to the frame part (10) of the terminal device.

6. The terminal device according to any of the claims 1-5, **characterized in that** at least one attaching member (18a, 18b, 18c, 18d) is attached to the frame part (10) of the terminal device in an immobile manner.

7. The terminal device according to any of the claims 1-6, **characterized in that** said attaching member (18a, 18b, 18c, 18d) can be locked into the second position.

8. The terminal device according to any of the claims 1-7, **characterized in that** the attaching surface (34) of the locking tab (22) has a shape which substantially corresponds to the shape of the inner surface of the venthole (14) wall (16) and/or a surface shape which improves friction, such as a roughened surface or a serrated pattern.

9. The terminal device according to any of the claims 1-8, **characterized in that** the attaching surface (34) of the locking tab (22) has a flexible material layer (36).

10. The terminal according to claim 8 or 9, **characterized in that** there is a glue layer on the attaching surface (34) of the locking tab (22) or on the surface of the flexible material layer (36).

11. The terminal device according to any of the claims 1-10, **characterized in that** the locking tab (22) has a magnet or the locking tab (22) is at least partly magnetic.

12. The terminal device according to any of the claims 1-11, **characterized in that** the locking tab (22) has a support part for supporting and/or carrying a device to be placed inside the venthole (14).

13. The terminal device according to any of claims 1-12, **characterized in that** it is an air inlet valve, an exhaust valve or a diffuser.

14. The terminal device according to any of the claims 1-13, **characterized in that** it is a part or an attaching piece of an air inlet valve, and exhaust valve or a diffuser.

15. A method for connecting a terminal device to a venthole (14), which has a wall (16) and which terminal device has a plate like frame part (10) and gripping members which can extend into the venthole (14) for attaching to the venthole (14) wall (16), which gripping members comprise a first locking tab (22) and a second locking tab (22) and which method comprises setting the locking tabs (22) in a first formation, where the locking tabs (22) are at a first distance from each other and fitting the locking tabs (22) inside the venthole (14), **characterized in that** said locking tab (22) is arranged in an attaching member (18a, 18b, 18c, 18d), which attaching member (18a, 18b, 18c, 18d) has plate like base (20) attached to the frame part (10) of the terminal device and the locking tab (22) bends in a substantially right angle from the base (20) and the method further comprises
- while the locking tabs (22) are inside the venthole (14), setting the locking tabs (22) in a second formation, whereby the locking tab (22) moves in the direction of the plane defined by the frame part, in which second formation the locking tabs are at a second distance from each other, which second distance is larger than the first distance and in which second formation the locking tabs (22) settle against the inner surface of the venthole (14) wall (16).

16. The method according to claim 15, **characterized in that** the method is used to connect a terminal device according to any of the claims 1-14 to a venthole (14).

## Patentansprüche

1. Anschlussvorrichtung, die mit einem Entlüftungsloch (14) zu verbinden ist, wobei das Entlüftungsloch (14) eine Wand (16) aufweist und die Anschlussvorrichtung einen plattenartigen Rahmenteil (10) und Greifelemente aufweist, die sich in das Entlüftungsloch (14) erstrecken können, um an der Wand (16) des Entlüftungslochs (14) befestigt zu werden, wobei die Greifelemente eine erste Verriegelungslasche (22) und eine zweite Verriegelungslasche (22) umfassen und wobei die erste und die zweite Verriegelungslasche (22) in einer ersten Formation, in der die erste und die zweite Verriegelungslasche (22) in einem ersten Abstand voneinander sind, und in einer zweiten Formation, in der die erste und die zweite Verriegelungslasche (22) in einem zweiten Abstand voneinander sind, wobei der zweite Abstand größer als der erste Abstand ist, eingestellt werden können **dadurch gekennzeichnet, dass** die Verriegelungslaschen eine Befestigungsfläche (34) aufweisen, die gegen die Innenfläche der Wand (16) des Lüftungslochs (14) zu setzen ist, und die Verriegelungslasche (22) in einem Befestigungselement (18a, 18b, 18c, 18d) angeordnet ist, wobei das Befestigungselement (18a, 18b, 18c, 18d) eine plattenartige Basis (20) aufweist, die an dem Rahmenteil (10) der Anschlussvorrichtung angebracht ist, und die Verriegelungslasche (22) in einem im Wesentlichen rechten Winkel von der Basis (20) gebogen ist, und dass mindestens ein Befestigungselement (18a, 18b, 18c, 18d) gelenkig an dem Rahmenteil (10) befestigt ist, so dass das Befestigungselement (18a, 18b, 18c, 18d) in der durch das Rahmenteil definierten Ebene in eine erste Position, in der sich die Verriegelungslaschen (22) in der ersten Formation setzen, und in eine zweite Position, in der sich die Verriegelungslaschen (22) in der zweiten Formation setzen, gedreht werden kann.

2. Anschlussvorrichtung nach Anspruch 1, **dadurch gekennzeichnet, dass** die Greifelemente zusätzlich eine dritte Verriegelungslasche (22) umfassen, so dass die erste, zweite und dritte Verriegelungslasche (22) in einer ersten Formation, in der der Umfang des durch die erste, zweite und dritte Verriegelungslasche (22) begrenzten Dreiecks eine erste Länge aufweist, und in einer zweiten Formation, in der der Umfang des durch die erste, zweite und dritte Verriegelungslasche (22) begrenzten Dreiecks eine zweite Länge aufweist, die größer als die erste Länge ist, eingestellt werden können.

3. Anschlussvorrichtung nach Anspruch 2, **dadurch gekennzeichnet, dass** die Greifelemente zusätzlich eine vierte Verriegelungslasche (22) umfassen, so dass die erste, zweite, dritte und vierte Verriegelungslasche (22) in eine erste Formation, in der der Umfang des durch die erste, zweite, dritte und vierte Verriegelungslasche (22) begrenzten Polygons eine erste Länge hat, und in eine zweite Formation, in der der Umfang des durch die erste, zweite, dritte und vierte Verriegelungslasche (22) begrenzten Polygons eine zweite Länge hat, die größer als die erste Länge ist, eingestellt werden kann.

4. Anschlussvorrichtung nach einem der Ansprüche 1-3, **dadurch gekennzeichnet, dass** mindestens eine Verriegelungslasche (22) in Bezug auf den Rahmenteil (10) der Anschlussvorrichtung unbeweglich ist.

5. Anschlussvorrichtung nach einem der Ansprüche 1-4, **dadurch gekennzeichnet, dass** mindestens eine Verriegelungslasche (22) gegenüber dem Rahmenteil (10) der Anschlussvorrichtung beweglich ist.

6. Anschlussvorrichtung nach einem der Ansprüche 1-5, **dadurch gekennzeichnet, dass** mindestens ein Befestigungselement (18a, 18b, 18c, 18d) unbeweglich an dem Rahmenteil (10) der Anschlussvorrichtung befestigt ist.

7. Anschlussvorrichtung nach einem der Ansprüche 1-6, **dadurch gekennzeichnet, dass** das Befestigungselement (18a, 18b, 18c, 18d) in der zweiten Position verriegelt werden kann.

8. Anschlussvorrichtung nach einem der Ansprüche 1-7, **dadurch gekennzeichnet, dass** die Befestigungsfläche (34) der Verriegelungslasche (22) eine Form aufweist, die im Wesentlichen der Form der Innenfläche der Wand (16) des Entlüftungslochs (14) entspricht und/oder eine Oberflächenform aufweist, die die Reibung verbessert, wie beispielsweise eine aufgeraute Oberfläche oder ein gezacktes Muster.

9. Anschlussvorrichtung nach einem der Ansprüche 1-8, **dadurch gekennzeichnet, dass** die Anbringungsfläche (34) der Verriegelungslasche (22) eine flexible Materialschicht (36) aufweist.

10. Anschlussvorrichtung nach Anspruch 8 oder 9, **dadurch gekennzeichnet, dass** sich auf der Anbringungsfläche (34) der Verriegelungslasche (22) oder auf der Oberfläche der flexiblen Materialschicht (36) eine Klebeschicht befindet.

11. Anschlussvorrichtung nach einem der Ansprüche 1-10, **dadurch gekennzeichnet, dass** die Verriegelungslasche (22) einen Magneten aufweist oder die Verriegelungslasche (22) zumindest teilweise magnetisch ist.

12. Anschlussvorrichtung nach einem der Ansprüche 1-11, **dadurch gekennzeichnet, dass** die Verriegelungslasche (22) ein Trägerteil zum Stützen und/oder Tragen einer in das Lüftungsloch (14) einzulegenden Vorrichtung aufweist.

13. Anschlussvorrichtung nach einem der Ansprüche 1-12, **dadurch gekennzeichnet, dass** es sich um ein Lufteinlassventil, ein Auslassventil oder einen Diffusor handelt.

14. Anschlussvorrichtung nach einem der Ansprüche 1-13, **dadurch gekennzeichnet, dass** es sich um ein Teil oder ein Anbauteil eines Lufteinlassventils, eines Auslassventils oder eines Diffusors handelt.

15. Verfahren zum Verbinden einer Anschlussvorrichtung mit einem Entlüftungsloch (14), das eine Wand (16) aufweist, wobei die Anschlussvorrichtung ein plattenförmiges Rahmenteil (10) und Greifelemente aufweist, die sich in das Entlüftungsloch (14) hinein erstrecken können, um an der Wand (16) des Entlüftungslochs (14) befestigt zu werden, wobei die Greifelemente eine erste Verriegelungslasche (22) und eine zweite Verriegelungslasche (22) umfassen, und wobei das Verfahren das Einstellen der Verriegelungslaschen (22) in eine erste Formation umfasst, wobei sich die Verriegelungslaschen (22) in einem ersten Abstand voneinander befinden, und das Einsetzen der Verriegelungslaschen (22) in das Innere des Lüftungslochs (14), **dadurch gekennzeichnet, dass** die Verriegelungslasche (22) in einem Befestigungselement (18a, 18b, 18c, 18d) angeordnet ist, wobei das Befestigungselement (18a, 18b, 18c, 18d) eine plattenartige Basis (20) aufweist, die an dem Rahmenteil (10) der Anschlussvorrichtung angebracht ist, und die Verriegelungslasche (22) in einem im Wesentlichen rechten Winkel von der Basis (20) abgewinkelt ist, und das Verfahren ferner Folgendes umfasst
- während sich die Verriegelungslaschen (22) im Inneren des Lüftungslochs (14) befinden, die Verriegelungslaschen (22) in eine zweite Formation zu bringen, wodurch sich die Verriegelungslasche (22) in Richtung der durch das Rahmenteil definierten Ebene bewegt, wobei sich die Verriegelungslaschen in dieser zweiten Formation in einem zweiten Abstand voneinander befinden, wobei dieser zweite Abstand größer ist als der erste Abstand, und wobei sich die Verriegelungslaschen (22) in dieser zweiten Formation gegen die Innenfläche der Wand (16) des Lüftungslochs (14) setzen.

16. Verfahren nach Anspruch 15, **dadurch gekennzeichnet, dass** das Verfahren verwendet wird, um eine Anschlussvorrichtung nach einem der Ansprüche 1-14 mit einem Entlüftungsloch (14) zu verbinden.

## Revendications

1. Dispositif terminal à connecter à un trou d'aération (14), lequel trou d'aération (14) a une paroi (16) et lequel dispositif terminal a une partie de cadre en forme de plaque (10) et des éléments de préhension qui peuvent s'étendre dans le trou d'aération (14) pour une fixation à la paroi (16) de trou d'aération (14), lesquels éléments de préhension comprennent une première languette de verrouillage (22) et une deuxième languette de verrouillage (22) et lesquelles première et deuxième languettes de verrouillage (22) peuvent être placées dans une première formation, où les première et deuxième languettes de verrouillage (22) sont à une première distance l'une de l'autre, et dans une seconde formation, où les première et deuxième languettes de verrouillage (22) sont à une seconde distance l'une de l'autre, laquelle seconde distance est supérieure à la première distance, **caractérisé en ce que** lesdites languettes de verrouillage ont une surface de fixation (34) à placer contre la surface interne de la paroi (16) de trou d'aération (14) et ladite languette de verrouillage (22) est agencée dans un élément de fixation (18a, 18b, 18c, 18d), lequel élément de fixation (18a, 18b, 18c, 18d) a une base en forme de plaque (20) fixée à la partie de cadre (10) du dispositif terminal et la languette de verrouillage (22) se plie selon un angle sensiblement droit par rapport à la base (20) et **en ce qu'**au moins un élément de fixation (18a, 18b, 18c, 18d) est fixé à la partie de cadre (10) de manière articulée, de sorte que l'élément de fixation (18a, 18b, 18c, 18d) peut être tourné dans le plan défini par la partie de cadre dans une première position, où les languettes de verrouillage (22) se placent dans la première formation, et dans une seconde position, où les languettes de verrouillage (22) se placent dans la seconde formation.

2. Dispositif terminal selon la revendication 1, **caractérisé en ce que** lesdits éléments de préhension comprennent en outre une troisième languette de verrouillage (22), de sorte que les première, deuxième et troisième languettes de verrouillage (22) peuvent être placées dans une première formation, où le périmètre du triangle délimité par les première, deuxième et troisième languettes de verrouillage (22) a une première longueur, et dans une seconde formation, où le périmètre du triangle délimité par les première, deuxième et troisième languettes de verrouillage (22) a une seconde longueur, laquelle seconde longueur est supérieure à la première longueur.

3. Dispositif terminal selon la revendication 2, **caractérisé en ce que** lesdits éléments de préhension comprennent en outre une quatrième languette de verrouillage (22), de sorte que les première, deuxième, troisième et quatrième languettes de verrouillage (22) peuvent être placées dans une première formation, où le périmètre du polygone délimité par les première, deuxième, troisième et quatrième languettes de verrouillage (22) a une première longueur, et dans une seconde formation, où le périmètre du polygone délimité par les première, deuxième, troisième et quatrième languettes de verrouillage (22) a une seconde longueur, laquelle seconde longueur est supérieure à la première longueur.

4. Dispositif terminal selon l'une quelconque des revendications 1 à 3, **caractérisé en ce qu'**au moins une languette de verrouillage (22) est immobile par rapport à la partie de cadre (10) du dispositif terminal.

5. Dispositif terminal selon l'une quelconque des revendications 1 à 4, **caractérisé en ce qu'**au moins une languette de verrouillage (22) est mobile par rapport à la partie de cadre (10) du dispositif terminal.

6. Dispositif terminal selon l'une quelconque des revendications 1 à 5, **caractérisé en ce qu'**au moins un élément de fixation (18a, 18b, 18c, 18d) est fixé à la partie de cadre (10) du dispositif terminal de manière immobile.

7. Dispositif terminal selon l'une quelconque des revendications 1 à 6, **caractérisé en ce que** ledit élément de fixation (18a, 18b, 18c, 18d) peut être verrouillé dans la seconde position.

8. Dispositif terminal selon l'une quelconque des revendications 1 à 7, **caractérisé en ce que** la surface de fixation (34) de la languette de verrouillage (22) a une forme qui correspond sensiblement à la forme de la surface interne de la paroi (16) de trou d'aération (14) et/ou une forme de surface qui améliore le frottement, telle qu'une surface rugueuse ou un motif dentelé.

9. Dispositif terminal selon l'une quelconque des revendications 1 à 8, **caractérisé en ce que** la surface de fixation (34) de la languette de verrouillage (22) a une couche de matériau flexible (36).

10. Terminal selon la revendication 8 ou 9, **caractérisé en ce qu'**il y a une couche de colle sur la surface de fixation (34) de la languette de verrouillage (22) ou sur la surface de la couche de matériau flexible (36).

11. Dispositif terminal selon l'une quelconque des revendications 1 à 10, **caractérisé en ce que** la languette de verrouillage (22) a un aimant ou la languette de verrouillage (22) est au moins partiellement magnétique.

12. Dispositif terminal selon l'une quelconque des revendications 1 à 11, **caractérisé en ce que** la languette de verrouillage (22) a une partie de support pour supporter et/ou porter un dispositif à placer à l'intérieur du trou d'aération (14).

13. Dispositif terminal selon l'une quelconque des revendications 1 à 12, **caractérisé en ce qu'**il s'agit d'une soupape d'admission d'air, d'une soupape d'échappement ou d'un diffuseur.

14. Dispositif terminal selon l'une quelconque des revendications 1 à 13, **caractérisé en ce qu'**il s'agit d'une partie ou d'une pièce de fixation d'une soupape d'admission d'air et d'une soupape d'échappement ou d'un diffuseur.

15. Procédé de connexion d'un dispositif terminal à un trou d'aération (14), qui a une paroi (16) et lequel dispositif terminal a une partie de cadre en forme de plaque (10) et des éléments de préhension qui peuvent s'étendre dans le trou d'aération (14) pour une fixation à la paroi (16) de trou d'aération (14), lesquels éléments de préhension comprennent une première languette de verrouillage (22) et une deuxième languette de verrouillage (22) et lequel procédé comprend le placement des languettes de verrouillage (22) dans une première formation, où les languettes de verrouillage (22) sont à une première distance l'une de l'autre et s'adaptent aux languettes de verrouillage (22) à l'intérieur du trou d'aération (14), **caractérisé en ce que** ladite languette de verrouillage (22) est agencée dans un élément de fixation (18a, 18b, 18c, 18d), lequel élément de fixation (18a, 18b, 18c, 18d) a une base en forme de plaque (20) fixée à la partie de cadre (10) du dispositif terminal et la languette de verrouillage (22) se plie selon un angle sensiblement droit par rapport à la base (20) et le procédé comprend en outre
- lorsque les languettes de verrouillage (22) sont à l'intérieur du trou d'aération (14), le placement des languettes de verrouillage (22) dans une seconde formation, selon lequel la languette de verrouillage (22) se déplace dans la direction du plan défini par la partie de cadre, dans laquelle seconde formation les languettes de verrouillage sont à une seconde distance l'une de l'autre, laquelle seconde distance est supérieure à la première distance et dans laquelle seconde formation les languettes de verrouillage (22) se placent contre la surface interne de la paroi (16) de trou d'aération (14) .

16. Procédé selon la revendication 15, **caractérisé en ce que** le procédé est utilisé pour connecter un dispositif terminal selon l'une quelconque des revendications 1 à 14 à un trou d'aération (14).
